(19) Europäisches Patentamt
European Patent Office
Office européen des brevets

(11) **EP 4 692 474 A1**

(12) **EUROPEAN PATENT APPLICATION**
published in accordance with Art. 153(4) EPC

(43) Date of publication:
**11.02.2026 Bulletin 2026/07**

(21) Application number: **23930957.8**

(22) Date of filing: **25.12.2023**

(51) International Patent Classification (IPC):
**E02F 9/26** *(2006.01)* **E02F 9/20** *(2006.01)*

(52) Cooperative Patent Classification (CPC):
**E02F 9/20; E02F 9/26**

(86) International application number:
**PCT/JP2023/046527**

(87) International publication number:
**WO 2024/202341 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.03.2023 JP 2023049861**

(71) Applicant: **Hitachi Construction Machinery Co.,
Ltd.
Tokyo 110-0015 (JP)**

(72) Inventors:
• **NAMAI Nobuo**
**Tsuchiura-shi, Ibaraki 300-0013 (JP)**
• **YAMABAYASHI Jun**
**Tsuchiura-shi, Ibaraki 300-0013 (JP)**
• **KANDA Kei**
**Tsuchiura-shi, Ibaraki 300-0013 (JP)**

(74) Representative: **MERH-IP Matias Erny Reichl
Hoffmann
Patentanwälte PartG mbB
Paul-Heyse-Straße 29
80336 München (DE)**

(54) **WORK MACHINE**

(57) A work machine includes a machine body, a work device attached to the machine body, an acceleration sensor attached to the machine body or the work device, and a controller. The controller determines which operating state among a plurality of operating states the work machine is in on the basis of running information on the work machine, executes weighting according to the degree of influence of vibration concerning each of the operating states on the basis of a sensing result of the acceleration sensor, computes a cumulative load that represents a cumulative value of a load acting on the work machine concerning each of the operating states, computes a total cumulative load by summing the cumulative load of each of the operating states, and outputs the total cumulative load.

[FIG. 5]

```
              START
                │ S115
        FILTER PROCESSING
                │ S120
        DETERMINATION OF
        OPERATING STATE
        (DETERMINATION OF
        OPERATING ZONE)
  WORKING ZONE │ TRAVELLING ZONE │ IDLE ZONE
     ┌─────────┼──────────────┐
   S130       S140           S156
FREQUENCY   FREQUENCY     COMPUTE
COMPUTATION COMPUTATION   CUMULATIVE LOAD D0
                          (D0 = 0)
   S133       S143
LOAD         LOAD
CONVERSION   CONVERSION
   S136       S146           S159
COMPUTE      COMPUTE       COMPUTE
CUMULATIVE   CUMULATIVE    RUNNING TIME T0
LOAD D1      LOAD D2
   S139       S149
COMPUTE      COMPUTE
RUNNING      RUNNING
TIME T1      TIME T2
     └─────────┼──────────────┘
            S160
   COMPUTE TOTAL RUNNING TIME Tt
            S165
   COMPUTE RATIOS R0, R1, AND R2 OF RUNNING TIME
   OF RESPECTIVE OPERATING STATES
            S170
   COMPUTE TOTAL CUMULATIVE LOAD Dt
            S180
   OUTPUT COMPUTATION RESULT
            END
```

## Description

Technical Field

The present invention relates to a work machine.

Background Art

There is known a work machine that outputs the sum of cumulative times of the respective operating states of the work machine in order to grasp the degree of wear of the work machine (refer to Patent Document 1). The work machine described in Patent Document 1 outputs not only the total cumulative time but also a result of determination concerning travelling vibration executed by the work machine at every predetermined timing. Specifically, the work machine described in Patent Document 1 computes the vibration intensity that is the magnitude of vibration at every predetermined timing, and classifies the computed vibration intensity into nine levels. Further, the work machine counts the number of times of determination concerning each of the nine vibration intensity levels, and transmits the counted number to a server (refer to Patent Document 1).

Prior Art Document

Patent Document

Patent Document 1: International Publication No. WO2021/025034A1

Summary of the Invention

Problem to be Solved by the Invention

However, it is difficult for the technology described in Patent Document 1 to quantify the degree of damage accumulated in daily work executed by the work machine. Thus, a technology that can accurately quantify the degree of damage accumulated is demanded.
The present invention intends to provide a work machine that can accurately quantify the degree of damage accumulated.

Means for Solving the Problem

A work machine according to an aspect of the present invention includes a machine body, a work device attached to the machine body, an acceleration sensor attached to the machine body or the work device, and a controller. The controller is configured to determine which operating state among a plurality of operating states the work machine is in on the basis of running information on the work machine, execute weighting according to the degree of influence of vibration concerning each of the operating states on the basis of a sensing result of the acceleration sensor, compute a cumulative load that represents a cumulative value of a load acting on the work machine concerning each of the operating states, compute a total cumulative load by summing the cumulative load for each of the operating states, and output the total cumulative load.

Advantages of the Invention

According to the present invention, a work machine that can accurately quantify the degree of damage accumulated can be provided.

Brief Description of the Drawings

[Fig. 1] Fig. 1 is a configuration diagram of a hydraulic excavator according to a first embodiment of the present invention.
[Fig. 2] Fig. 2 is a diagram depicting a system configuration of the hydraulic excavator.
[Fig. 3] Fig. 3 is a perspective view of a swing frame, and depicts an attachment position of a machine body inclination angle sensor.

[Fig. 4] Fig. 4 is a functional block diagram of a machine controller.

[Fig. 5] Fig. 5 is a flowchart depicting an example of the flow of processing executed by the machine controller.

[Fig. 6] Fig. 6 is a diagram depicting an example of time change in an operating state of the hydraulic excavator.

[Fig. 7] Fig. 7 is a diagram depicting an example of a displayed image displayed on a display screen of a display device.

Modes for Carrying Out the Invention

A work machine according to an embodiment of the present invention is described below with use of the drawings. In the following, a description is given of an example in which the work machine is a hydraulic excavator including a bucket 10 as work equipment (attachment) at the tip of a work device.

<First Embodiment>

-Overall Configuration of Hydraulic Excavator-

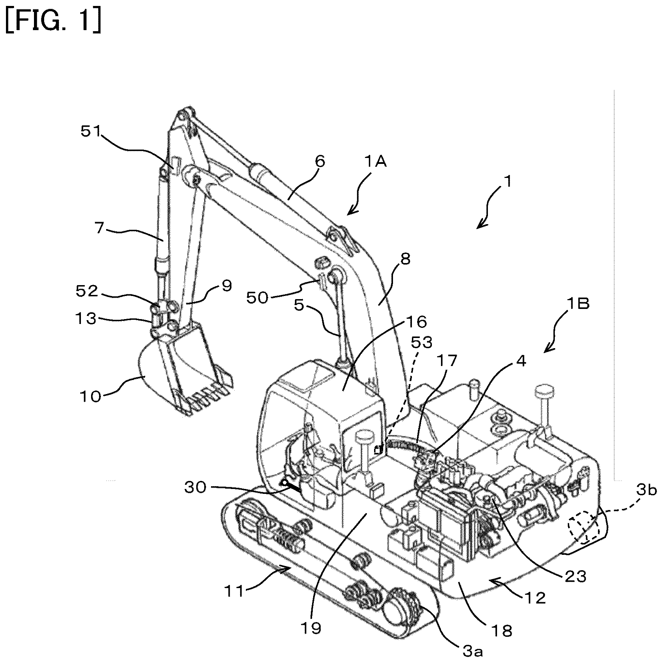

Fig. 1 is a configuration diagram of a hydraulic excavator 1 according to a first embodiment of the present invention. As depicted in Fig. 1, the hydraulic excavator 1 includes a machine body 1B and an articulated front work device (hereinafter, referred to simply as work device) 1A attached to the machine body 1B. The machine body 1B has a lower track structure 11 that travels by left and right travelling hydraulic motors (hydraulic actuators) 3a and 3b and an upper swing structure 12 swingably disposed over the lower track structure 11, with a swing circle 17 interposed therebetween. The upper swing structure 12 swings by a swing hydraulic motor (hydraulic actuator) 4.

The work device 1A includes a plurality of driving target members (boom 8, arm 9, and bucket 10) and a plurality of hydraulic actuators that drive the driving target members. The plurality of driving target members are joined in series. A base end portion of the boom 8 is pivotally supported at a front portion of the upper swing structure 12 with the interposition of a boom pin. The arm 9 is pivotally joined to a tip portion of the boom 8 with the interposition of an arm pin. The bucket 10 as work equipment is pivotally joined to a tip portion of the arm 9 with the interposition of a bucket pin. The boom 8 is driven by a hydraulic cylinder (hereinafter, referred to also as boom cylinder) 5 that is a hydraulic actuator. The arm 9 is driven by a hydraulic cylinder (hereinafter, referred to also as arm cylinder) 6 that is a hydraulic actuator. The bucket 10 is driven by a hydraulic cylinder (hereinafter, referred to also as bucket cylinder) 7 that is a hydraulic actuator.

In order to allow measurement of the pivot angles of the boom 8, the arm 9, and the bucket 10, a boom angle sensor 50, an arm angle sensor 51, and a bucket angle sensor 52 are attached to the boom 8, the arm 9, and a bucket link 13, respectively. A machine body inclination angle sensor 53 that senses the inclination angle of the upper swing structure 12 (machine body 1B) with respect to a reference plane (for example, horizontal plane) is attached to the upper swing structure 12.

A cab 16 is disposed on the left side of a front portion of the upper swing structure 12. A machine room 19 is disposed on the rear side of the cab 16. In the cab 16, an operation device to execute various operations of the hydraulic excavator 1, an operation seat on which an operator sits, and the like are disposed. An engine 23, a hydraulic pump, the swing hydraulic motor 4, and the like are mounted in the machine room 19. Further, a counterweight 18 for maintaining balance during work is disposed at a rear portion of the upper swing structure 12. The swing circle 17 is disposed between the upper swing structure 12 and the lower track structure 11. The swing circle 17 is driven by the swing hydraulic motor 4, and swings the upper swing structure 12 in a right direction or a left direction relative to the lower track structure 11.

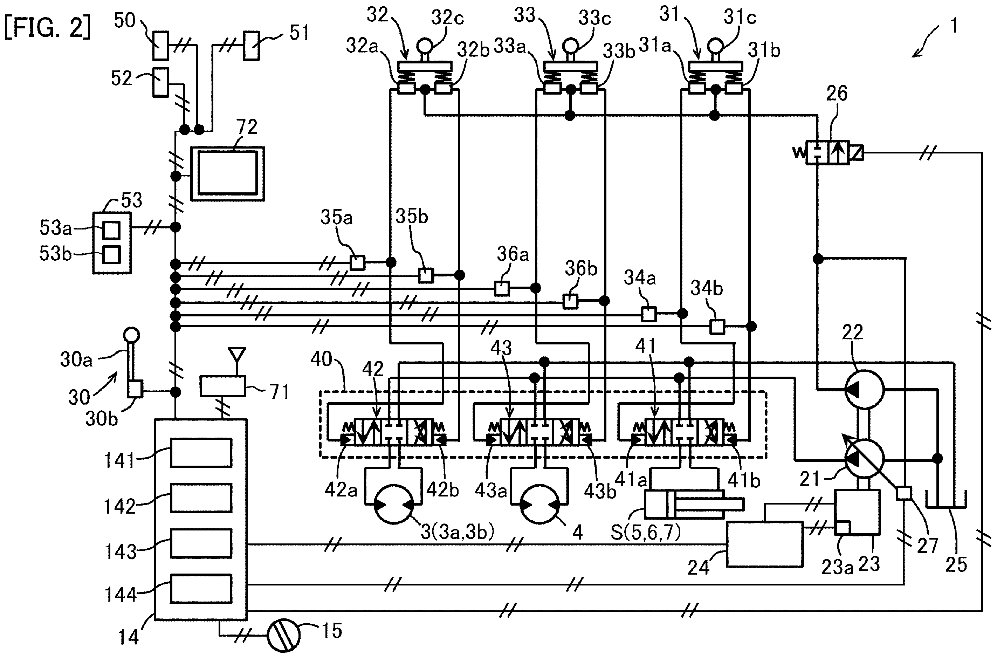

Fig. 2 is a diagram depicting a system configuration of the hydraulic excavator 1. The hydraulic excavator 1 includes a machine controller 14 that is a controller that controls operation of each portion of the hydraulic excavator 1, an engine control dial 15 for manually changing the upper limit value of the engine rotation speed, the engine 23 as a prime mover, and an engine controller 24 that is a controller that controls the engine 23. A rotation speed sensor 23a such as a pickup sensor that senses the rotation speed of the engine 23 is connected to the engine controller 24. Although the engine 23 is given as an example of the prime mover in the present embodiment, it is also possible to use a prime mover such as an electrically driven motor.

The machine controller 14 is connected to the engine controller 24 and the like by an in-machine network referred to as CAN (Controller Area Network), and executes mutual transmission and reception of information (data).

The machine controller 14 and the engine controller 24 cooperate to control the rotation speed of the engine 23. In the engine rotation speed control, the machine controller 14 computes an engine target rotation speed on the basis of an operation position of the engine control dial 15, an operation state of operation devices 31, 32, and 33 for the respective actuators (3 to 7), which are described later, a load state of a main pump 21 to be described later, and the like, and outputs the engine target rotation speed to the engine controller 24.

The engine controller 24 computes an engine actual rotation speed from a signal of the rotation speed sensor 23a. The engine controller 24 controls the engine 23 to cause the engine actual rotation speed to become the engine target rotation speed. The engine controller 24 outputs the computed engine actual rotation speed to the machine controller 14.

The hydraulic excavator 1 includes the main pump 21 that is a hydraulic pump of the variable displacement type and a pilot pump 22 that is a hydraulic pump of the fixed displacement type. The main pump 21 and the pilot pump 22 are driven by the engine 23, and suck a hydraulic operating fluid from a fluid tank 25 to deliver the hydraulic operating fluid to a delivery line. A lock valve 26 is disposed on a pilot line that is a delivery line of the pilot pump 22. A pump regulator 27 is connected to a portion between the lock valve 26 and the pilot pump 22 in the pilot line.

The lock valve 26 is a solenoid selector valve that can interrupt the pilot line of the pilot pump 22. The lock valve 26 is switched to a circuit interruption position and a circuit communication position by a solenoid driven by the machine controller 14. The lock valve 26 is operated by the operator. A lock lever device 30 is installed in the cab 16. When the lock lever device 30 is set at a lock position, the lock valve 26 is switched to the circuit interruption position. In this state, the hydraulic operating fluid delivered from the pilot pump 22 does not flow to the downstream side of the lock valve 26. When the lock lever device 30 is set at a lock release position, the lock valve 26 is switched to the circuit communication position. In this state, the hydraulic operating fluid delivered from the pilot pump 22 flows to the downstream side of the lock valve 26.

The pump regulator 27 has a pump flow control valve that is a solenoid proportional valve that reduces the delivery pressure (pilot primary pressure) of the pilot pump 22 and outputs the reduced pressure. The pump regulator 27 reduces the pilot primary pressure in response to a control signal (current) from the machine controller 14 to output a secondary pressure. The pump regulator 27 incorporates a control mechanism for the tilting angle (displacement volume) of the main pump 21, and controls the displacement volume (that is, delivery flow rate) of the main pump 21 depending on a pump flow control pressure that is the output (secondary pressure) of the pump flow control valve.

The main pump 21 is a drive source for driving hydraulic actuators such as the boom cylinder 5, the arm cylinder 6, the bucket cylinder 7, the travelling hydraulic motors 3a and 3b, and the swing hydraulic motor 4. Although only one main pump 21 is depicted in Fig. 2, a plurality of main pumps 21 may exist.

The hydraulic excavator 1 includes a boom operation device to operate the boom cylinder 5, an arm operation device to operate the arm cylinder 6, and a bucket operation device to operate the bucket cylinder 7. In Fig. 2, the work operation device 31 that represents one of the boom operation device, the arm operation device, and the boom operation device is depicted. Moreover, in Fig. 2, a hydraulic cylinder S that represents one of the boom cylinder 5, the arm cylinder 6, and the bucket cylinder 7 is depicted.

The hydraulic excavator 1 includes a left travelling operation device to operate the travelling hydraulic motor 3a of a left crawler of the lower track structure 11, a right travelling operation device to operate the travelling hydraulic motor 3b of a right crawler of the lower track structure 11, and the swing operation device 33 to operate the swing hydraulic motor 4. In Fig. 2, the travelling operation device 32 that represents one of the right travelling operation device and the left travelling operation device is depicted. Further, in Fig. 2, the travelling hydraulic motor 3 that represents one of the travelling hydraulic motor 3a of the left crawler and the travelling hydraulic motor 3b of the right crawler is depicted.

The work operation device 31 has an operation lever 31c that is operated through inclining by the operator and a pair of pressure reducing valves 31a and 31b of a hydraulic pilot type. The travelling operation device 32 has an operation lever 32c that is operated through inclining by the operator and a pair of pressure reducing valves 32a and 32b of the hydraulic pilot type. The swing operation device 33 has an operation lever 33c that is operated through inclining by the operator and a pair of pressure reducing valves 33a and 33b of the hydraulic pilot type.

The pressure reducing valves 31a, 31b, 32a, 32b, 33a, and 33b of the operation devices 31, 32, and 33 are disposed on the downstream side of the lock valve 26 in the pilot line. When the lock valve 26 is switched to the circuit communication position, the pressure reducing valves 31a, 31b, 32a, 32b, 33a, and 33b use the delivery pressure of the pilot pump 22 as a source pressure to generate a pilot pressure (referred to also as operation pressure) according to the operation amount and the operation direction of the operation lever 31c, 32c, or 33c.

The pilot pressure generated by the pressure reducing valve 31a, 31b, 32a, 32b, 33a, or 33b is introduced to a control valve 40. The control valve 40 has flow control valves 41, 42, and 43 for controlling the flow rate of the hydraulic operating fluid supplied from the main pump 21 to the hydraulic actuator (S, 3, or 4).

The pilot pressure (operation pressure) generated by the pressure reducing valve 31a, 31b, 32a, 32b, 33a, or 33b is used as a command (signal) to cause the hydraulic actuator (S, 3, or 4) to operate.

When the operation lever 31c, 32c, or 33c of the operation device 31, 32, or 33 is operated, the operation pressure (signal) according to the operation direction and the operation amount of the operation is introduced to a pressure receiving portion 41a, 41b, 42a, 42b, 43a, or 43b of the flow control valve 41, 42, or 43 of the control valve 40, and the flow control valve 41, 42, or 43 operates. Due to this, the hydraulic operating fluid delivered from the main pump 21 is supplied to the hydraulic actuator (S, 3, or 4) corresponding to the flow control valve 41, 42, or 43 through the flow control valve 41, 42, or 43, and the hydraulic actuator (S, 3, or 4) is driven.

The hydraulic excavator 1 has operation sensors (work operation sensors 34a and 34b, travelling operation sensors 35a and 35b, and swing operation sensors 36a and 36b) that sense the operation pressure (operation amount) of the operation device 31, 32, or 33. In the present embodiment, the operation sensors 34a, 34b, 35a, 35b, 36a, and 36b are pressure sensors disposed on pilot lines that connect the pressure reducing valve 31a, 31b, 32a, 32b, 33a, or 33b of the operation device 31, 32, or 33 to the pressure receiving portion 41a, 41b, 42a, 42b, 43a, or 43b of the flow control valve 41, 42, or 43.

The operation sensors 34a, 34b, 35a, 35b, 36a, and 36b sense the operation pressure (operation amount) generated through operation for the work device 1A, the lower track structure 11, and the upper swing structure 12 executed by the operator with the operation levers 31c, 32c, and 33c, and output the sensing result to the machine controller 14.

The work operation sensors 34a and 34b sense the operation pressure (referred to also as work operation pressure) that acts on the pressure receiving portion 41a or 41b of the flow control valve 41. When the work operation device 31 is the boom operation device, the work operation sensors 34a and 34b are boom operation sensors that sense the operation pressure for the boom cylinder 5 (that is, operation of the boom 8). Moreover, when the work operation device 31 is the arm operation device, the work operation sensors 34a and 34b are arm operation sensors that sense the operation pressure for the arm cylinder 6 (that is, operation of the arm 9). When the work operation device 31 is the bucket operation device, the work operation sensors 34a and 34b are bucket operation sensors that sense the operation pressure for the bucket cylinder 7 (that is, operation of the bucket 10). As described above, the work operation sensors 34a and 34b sense the operation pressure (operation amount) for causing the work device 1A to operate.

The travelling operation sensors 35a and 35b sense the operation pressure (referred to also as travelling operation pressure) that acts on the pressure receiving portion 42a or 42b of the flow control valve 42. That is, the travelling operation sensors 35a and 35b sense the operation pressure (operation amount) for causing the lower track structure 11 to operation (travel). The swing operation sensors 36a and 36b sense the operation pressure (referred to also as swing operation pressure) that acts on the pressure receiving portion 43a or 43b of the flow control valve 43. That is, the swing operation sensors 36a and 36b sense the operation pressure (operation amount) for causing the upper swing structure 12 to operate (swing).

Signals of the work operation sensors 34a and 34b, the travelling operation sensors 35a and 35b, and the swing operation sensors 36a and 36b are input to the machine controller 14. The machine controller 14 grasps an operation status of the hydraulic excavator 1 on the basis of the signals from the operation sensors 34a, 34b, 35a, 35b, 36a, and 36b.

The machine controller 14 is configured by a computer including a processing device 141 such as a CPU (Central Processing Unit), a non-volatile memory 142 such as a ROM (Read Only Memory), a flash memory, or a hard disk drive, a volatile memory 143 referred to as what is called a RAM (Random Access Memory), an input/output interface 144, and other peripheral circuits. The machine controller 14 may be configured by one computer, or may be configured by a plurality of computers.

Programs that can execute various computations are stored in the non-volatile memory 142. That is, the non-volatile memory 142 is a storage medium (storage device) that can read programs that implement functions of the present embodiment. The volatile memory 143 is a storage medium (storage device) that temporarily stores a computation result made by the processing device 141 and a signal input from the input/output interface 144. The processing device 141 is a device that loads the program stored in the non-volatile memory 142 into the volatile memory 143 and executes computation. The processing device 141 executes predetermined computation processing for data taken in from the input/output interface 144, the non-volatile memory 142, and the volatile memory 143 in accordance with the program.

The machine controller 14 is connected to each of the boom angle sensor 50, the arm angle sensor 51, the bucket angle sensor 52, the machine body inclination angle sensor 53, the operation sensors 34a, 34b, 35a, 35b, 36a, and 36b, the engine controller 24, the pump regulator 27, the lock lever device 30, the lock valve 26, the engine control dial 15, a communication device 71, and a display device 72.

An input section of the input/output interface 144 converts signals input from various devices (engine controller 24, engine control dial 15, lock lever device 30, boom angle sensor 50, arm angle sensor 51, bucket angle sensor 52, machine body inclination angle sensor 53, operation sensors 34a, 34b, 35a, 35b, 36a, and 36b, communication device 71, and the like) to data with which computation by the processing device 141 is possible. Moreover, an output section of the input/output interface 144 generates a signal for output according to a computation result made in the processing device 141, and outputs the signal to the various devices (engine controller 24, lock valve 26, pump regulator 27, communication device 71, display device 72, and the like).

The lock lever device 30 is an operation device that can be switched to the lock release position to make a state in which operation of the hydraulic actuators (S, 3, and 4) by the operation devices 31, 32, and 33 is possible and the lock position to make a state in which operation of the hydraulic actuators (S, 3, and 4) by the operation devices 31, 32, and 33 is impossible.

The lock lever device 30 includes a lock lever 30a selectively operated to the lock position and the lock release position and an operation position sensor 30b that outputs a signal according to the operation position of the lock lever 30a to the machine controller 14.

The machine controller 14 senses the operation position of the lock lever 30a on the basis of the signal output from the operation position sensor 30b, and controls the lock valve 26 according to the operation position of the lock lever device 30. When the lock lever 30a has been operated to the lock position, the machine controller 14 switches the lock valve 26 to the circuit interruption position. When the lock lever 30a has been operated to the lock release position, the machine controller 14 switches the lock valve 26 to the circuit communication position.

When the lock valve 26 is set at the circuit interruption position, the pilot primary pressure supplied from the pilot pump 22 to the operation devices 31, 32, and 33 is interrupted by the lock valve 26, which makes the state in which operation of the hydraulic actuators (S, 3, and 4) by the operation devices 31, 32, and 33 is impossible. When the lock valve 26 is set at the circuit communication position, the pilot primary pressure is supplied from the pilot pump 22 to the operation devices 31, 32, and 33. Therefore, the pilot pressure (operation pressure) generated by the operation devices 31, 32, and 33 is introduced to the flow control valves 41, 42, and 43 according to the operation amount. Thus, the state in which operation of the hydraulic actuators (S, 3, and 4) by the operation devices 31, 32, and 33 is possible is made.

The machine body inclination angle sensor 53 is an IMU (Inertial Measurement Unit: inertial measurement device) having an acceleration sensor 53a that senses acceleration in the axial directions of orthogonal three axes and an angular velocity sensor 53b that senses angular velocity around the orthogonal three axes. The boom angle sensor 50, the arm angle sensor 51, and the bucket angle sensor 52 are also IMUs having a similar configuration. The machine controller 14 computes the boom angle, the arm angle, the bucket angle, and the machine body inclination angle on the basis of information acquired by each IMU. A potentiometer may be employed as the angle sensors (50, 51, and 52).

In the hydraulic excavator 1, vibration or shock acts as a load during travelling and during work. Due to repetitive action of the load on the hydraulic excavator 1, constituent components of the hydraulic excavator 1 deteriorate. There is a difference between a component group that deteriorates due to vibration acting when an operating state of the hydraulic excavator 1 is a travelling state and a component group that deteriorates due to vibration acting when the operating state of the hydraulic excavator 1 is a working state, and the degree of influence of the vibration is also different. Thus, the machine controller 14 according to the present embodiment executes weighting according to the degree of influence of the vibration concerning each operating state of the hydraulic excavator 1 on the basis of a sensing result of the acceleration sensor 53a, and computes a cumulative load that represents a cumulative value of the load acting on the hydraulic excavator 1 concerning each operating state.

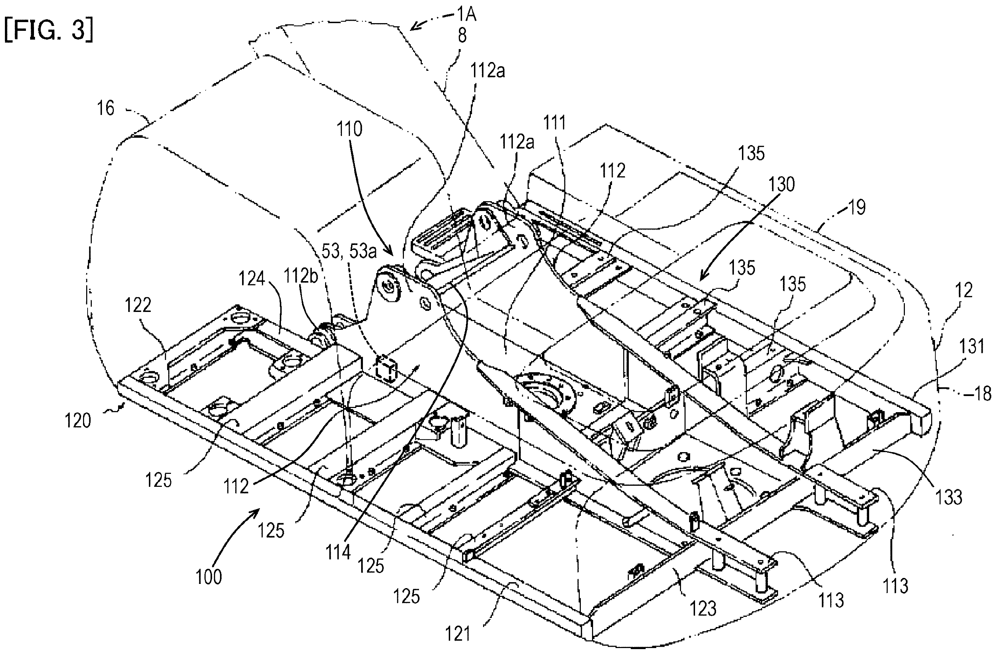

In the present embodiment, the machine controller 14 computes the cumulative load of the hydraulic excavator 1 on the basis of clock time history data on the acceleration sensed by the acceleration sensor 53a included in the machine body inclination angle sensor 53. An attachment position of the machine body inclination angle sensor 53 is described with reference to Fig. 3. Fig. 3 is a perspective view of a swing frame 100, and depicts the attachment position of the machine body inclination angle sensor 53.

As depicted in Fig. 3, the upper swing structure 12 has the cab 16, the machine room 19, the counterweight 18, and the swing frame 100 that supports them. At an upper portion of the swing frame 100, the cab 16 is disposed on the left front side and the machine room 19 is disposed on the rear side of the cab 16. Further, the counterweight 18 is disposed on the rear side of the machine room 19, and is configured to maintain weight balance between the front and rear sides during excavation action of the work device 1A disposed on the front side of the upper swing structure 12.

The swing frame 100 includes a center frame 110 forming a central portion of the swing frame 100, a left side frame 120 disposed on the left lateral side of the center frame 110, and a right side frame 130 disposed on the right lateral side of the center frame 110. The center frame 110 has a bottom plate 111 with a flat plate shape and a pair of left and right vertical plates (left vertical plate and right vertical plate) 112 erected on the bottom plate 111. The left and right vertical plates 112 each extend in the front-rear direction. The swing circle 17 (see Fig. 1) is attached to the lower surface side of the bottom plate 111. That is, the center frame 110 is supported by the swing circle 17.

The vertical plates 112 are formed into a mountain shape in side viewing. That is, the vertical plates 112 are formed such that the length in the front-rear direction becomes shorter toward the upper end. At top portions of the vertical plates 112, boom coupling portions 112a to which the boom 8 is pivotally coupled by a pin are provided. At front end portions of the vertical plates 112, cylinder coupling portions 112b to which the base end side of the boom cylinder 5 is pivotally coupled by a pin are provided.

A reinforcing plate 114 for enhancing the strength against a fall of the vertical plate 112 in the left-right direction is disposed between the pair of left and right vertical plates 112. Both left and right end portions of the reinforcing plate 114 are welded to the inside surface of the pair of left and right vertical plates 112. A weight-attached portion 113 to which the counterweight 18 is attached is disposed at a rear end portion of the center frame 110.

The left side frame 120 has a plurality of beams 125 extending in the left direction from the center frame 110, and is supported by the center frame 110 through the beams 125. Base end portions of the plurality of beams 125 are fixed to the center frame 110 by welding. Moreover, the left side frame 120 has an outer frame portion 121 that is a component fixed to tip portions of the plurality of beams 125 and extends in the front-rear direction, and an inner frame portion 124 that is a component fixed to the base end portion of the frontmost beam 125 and extends forward from this beam 125. The left side frame 120 has also a front frame portion 122 that is a component joining front end portions of the outer frame portion 121 and the inner frame portion 124 to each other and extends in the left-right direction, and a rear plate 123 that is a component joining rear end portions of the outer frame portion 121 and the center frame 110 to each other and extends in the left-right direction.

Similarly to the left side frame 120, the right side frame 130 has a plurality of beams 135, an outer frame portion 131, an inner frame portion, a front frame portion, and a rear plate 133. The right side frame 130 has a configuration similar to that of the left side frame 120, and thus detailed description thereof is omitted.

Circular mount attachment holes are made in the front frame portion 122 and the two beams 125 on the front side in the left side frame 120. The cab 16 is attached to these attachment holes with the interposition of an anti-vibration mount.

The swing frame 100 is supported by the swing circle 17. The outer frame portions 121 and 131 are disposed in a cantilevered state by the beams 125 and 135 extending from the center frame 110. Thus, the vibration acting on the hydraulic excavator 1 differs depending on the distance from the swing circle 17, and the vibration is larger at a place remoter from the center of swing. In a case in which the acceleration sensor 53a is attached to the outer frame portion 121 or 131, when a load acts on the swing frame 100 from the lower track structure 11, vibration amplified due to deflection of the beam 125 or 135 is sensed by the acceleration sensor 53a. It is preferable to attach the acceleration sensor 53a to the vicinity of the swing circle 17 with high rigidity in order to directly sense, as much as possible, vibration acting on the swing frame 100 from the lower track structure 11 or the work device 1A, that is, vibration generated in the upper swing structure 12 due to running of the machine body 1B for excavation, travelling, or the like.

In the present embodiment, the machine body inclination angle sensor 53 including the acceleration sensor 53a is attached to the inside surface in one of the pair of left and right vertical plates 112. The machine body inclination angle sensor 53 is attached to the vicinity of the bottom plate 111, that is, to a position closer to the bottom plate 111 than an attachment hole for the boom pin. The attachment position of the acceleration sensor 53a is not limited thereto. For example, the acceleration sensor 53a may be attached to the vicinity of the bottom plate 111 in the outside surface of the vertical plate 112, or may be attached to the vicinity of the vertical plate 112 in the bottom plate 111 (for example, on the inside of the swing circle 17 in plan viewing). That is, in the present embodiment, the acceleration sensor 53a is attached to the center frame 110 supported by the swing circle 17. Due to this, the vibration acting on the swing frame 100 from the lower track structure 11 or the work device 1A, that is, the vibration generated in the upper swing structure 12 due to running of the machine body 1B for excavation, travelling, or the like can be directly sensed.

Regarding attachment of the acceleration sensor 53a, it is not limited to the case of attachment to the center frame 110. For example, the acceleration sensor 53a may be attached to the inner frame portion 124 extending forward from the base end portion side of the frontmost beam 125. The inner frame portion 124 is disposed at a position close to the swing circle 17 compared with the outer frame portion 121. Further, the second moment of area is large in the inner frame portion 124 compared with the outer frame portion 121, a building cover forming the machine room 19, and the like. Thus, even in the case in which the acceleration sensor 53a is attached to the inner frame portion 124, it is possible to accurately sense the vibration acting on the swing frame 100 from the lower track structure 11 or the work device 1A, that is, the vibration generated in the upper swing structure 12 due to running of the machine body 1B for excavation, travelling, or the like.

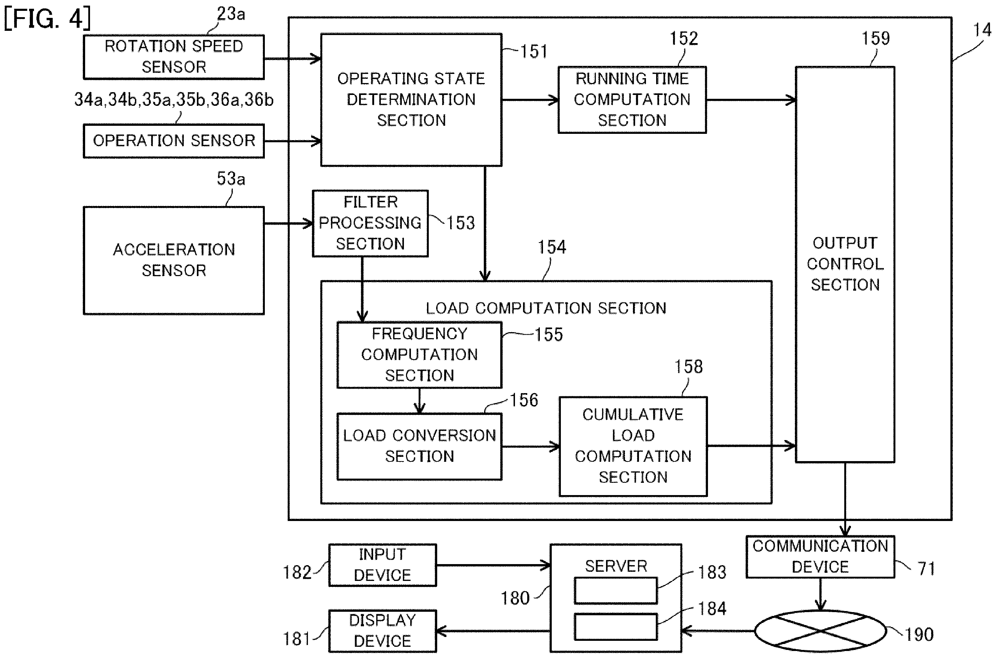

Functions of the machine controller 14 are described in detail with reference to Fig. 4. Fig. 4 is a functional block diagram of the machine controller 14. As depicted in Fig. 4, the machine controller 14 has functions as an operating state determination section 151, a running time computation section 152, a filter processing section 153, a load computation section 154, and an output control section 159.

The operating state determination section 151 determines which operating state among a plurality of operating states the hydraulic excavator 1 is in on the basis of running information (running data) on the hydraulic excavator 1 input to the machine controller 14. As the operating state of the hydraulic excavator 1, an idle state (standby state), a travelling state, and a working state exist. The running information includes a sensing result of the rotation speed sensor 23a, the sensing results of the operation sensors 34a, 34b, 35a, 35b, 36a, and 36b, and sensing results of the angle sensors 50 to 53. In Fig. 4, an example in which the rotation speed sensor 23a is directly connected to the machine controller 14 is depicted. However, the machine controller 14 may acquire the actual engine rotation speed through the engine controller 24 as described above.

The operating state determination section 151 determines which of the idle state (standby state), the travelling state, and the working state the operating state of the hydraulic excavator 1 is, on the basis of the running information on the hydraulic excavator 1. The operating state determination section 151 determines that the operating state of the hydraulic excavator 1 is the idle state when an idling condition is established. The idling condition is established when both the following (Condition 1) and (Condition 2) are satisfied.

(Condition 1) The hydraulic excavator 1 is in a state in which the engine 23 is running.

(Condition 2) The hydraulic excavator 1 is in a state in which none of the lower track structure 11, the upper swing structure 12, and the work device 1A is operated.

The operating state determination section 151 determines that (Condition 1) is satisfied when a rotation speed Ne of the engine 23 input to the machine controller 14 is at least a lower limit value Ne1 and at most an upper limit value Ne2. The lower limit value Ne1 of the rotation speed of the engine 23 corresponds to, for example, a minimum value set by the engine control dial 15, and the upper limit value Ne2 of the rotation speed of the engine 23 corresponds to a maximum value set by the engine control dial 15. When the hydraulic excavator 1 has a mode in which the rotation speed of the engine 23 increases and decreases, the upper limit value Ne2 becomes a value corresponding to a set rotation speed in the mode. Moreover, when the machine controller 14 has an automatic idle function, a value corresponding to an automatic idle rotation speed may be employed as the lower limit value Ne1. The automatic idle function is a function of controlling the rotation speed of the engine 23 to the automatic idle rotation speed lower than the above-described minimum value when a non-operated state has continued for a certain time.

The operating state determination section 151 determines that (Condition 2) is satisfied when all of the travelling operation pressures, the swing operation pressures, and the work operation pressures input from the operation sensors 34a, 34b, 35a, 35b, 36a, and 36b to the machine controller 14 are lower than an operation pressure threshold P0. The operation pressure threshold P0 is a threshold for determining whether or not the operation devices 31 to 33 are operated, and are stored in the non-volatile memory 142 in advance.

The operating state determination section 151 determines that the operating state of the hydraulic excavator 1 is the travelling state when a travelling condition is established. The travelling condition is established when travelling operation is executed alone, that is, when both the following (Condition 3) and (Condition 4) are satisfied.

(Condition 3) The hydraulic excavator 1 is in a state in which the lower track structure 11 is operated.

(Condition 4) The hydraulic excavator 1 is in a state in which neither the upper swing structure 12 nor the work device 1A is operated.

The operating state determination section 151 determines that (Condition 3) is satisfied when one of the travelling operation pressures (travelling operation pressure of the forward movement direction or the rearward movement direction) input from the operation sensors 35a and 35b to the machine controller 14 is equal to or higher than the operation pressure threshold P0. The operating state determination section 151 determines that (Condition 4) is satisfied when all of the swing operation pressures and the work operation pressures input from the operation sensors 34a, 34b, 36a, and 36b to the machine controller 14 are lower than the operation pressure threshold P0.

In the state in which the engine 23 is not running, the travelling operation pressure does not become equal to or higher than the operation pressure threshold P0. Thus, when (Condition 3) is satisfied, it can be deemed that the engine 23 is in a running state.

The operating state determination section 151 determines that the operating state of the hydraulic excavator 1 is the working state when a working condition is established. The working condition is established when the following (Condition 5) is satisfied.

(Condition 5) The hydraulic excavator 1 is in a state in which at least one of the work device 1A and the upper swing structure 12 is operated.

The operating state determination section 151 determines that (Condition 5) is satisfied when at least any of the swing operation pressures and the work operation pressures input from the operation sensors 34a, 34b, 36a, and 36b to the machine controller 14 is equal to or higher than the operation pressure threshold P0.

In the state in which the engine 23 is not running, the swing operation pressure and the work operation pressure do not become equal to or higher than the operation pressure threshold P0. Thus, when (Condition 5) is satisfied, it can be deemed that the engine 23 is in the running state.

The running time computation section 152 computes the running time for each operating state of the hydraulic excavator 1 by accumulating the time for each operating state. The running time computation section 152 starts the computation of the running time from start of the engine 23 by an engine key switch. When the engine 23 stops by the engine key switch, the running time computation section 152 computes a total running time Tt of the hydraulic excavator 1 by summing the running time for each operating state. The running time for each operating state is stored and retained in the non-volatile memory 142 also after the stop of the engine 23, and is used as an initial value for the next round of computation of the running time.

The running time computation section 152 computes the ratio of the running time for each operating state to the total running time Tt. A ratio R0 of the running time of the idle state to the total running time Tt is computed by dividing a running time T0 in the idle state by the total running time Tt (R1 = T0/Tt). A ratio R1 of the running time of the working state to the total running time Tt is computed by dividing a running time T1 in the working state by the total running time Tt (R1 = T1/Tt). A ratio R2 of the running time of the travelling state to the total running time Tt is computed by dividing a running time T2 in the travelling state by the total running time Tt (R2 = T2/Tt).

The filter processing section 153 executes filter processing for a signal (acceleration signal) representing the sensing result of the acceleration sensor 53a. The acceleration signal is stored in the non-volatile memory 142 as clock time history data (clock time history waveform). The filter processing section 153 removes a low frequency component of the acceleration signal (low frequency component lower than a first cutoff frequency fc1) by executing high-pass filter processing for the acceleration signal. The first cutoff frequency fc1 is, for example, approximately 0.1 to 1.0 [Hz]. This can reduce an influence given to computation processing to be described later by a component of gravitational acceleration included in the acceleration signal.

The filter processing section 153 removes a high frequency component of the acceleration signal (high frequency component higher than a second cutoff frequency fc2) by executing low-pass filter processing for the acceleration signal. The second cutoff frequency fc2 is, for example, approximately 20 to 40 [Hz]. This can reduce an influence given to the computation processing to be described later by a vibration component of the engine 23 included in the acceleration signal.

In the present embodiment, proper computation of the load is enabled by setting a sampling frequency to approximately 100 to 200 [Hz] and using the acceleration signal with a frequency of 0.1 to 40 [Hz] having an influence on the fatigue strength.

The load computation section 154 computes the cumulative load of the hydraulic excavator 1 on the basis of the clock time history data on the acceleration resulting from execution of the filter processing by the filter processing section 153.

When a load such as vibration or shock acts on a structure, stress is generated in the structure. The cumulative damage degree of the structure can be computed on the basis of extreme values of the stress extracted from clock time history data on the stress. Specifically, stress amplitudes (stress ranges) that are ranges of variation in the stress are extracted on the basis of a local maximum value and a local minimum value of the clock time history data (clock time history waveform) on the stress, and the appearance frequency of each stress amplitude is computed. When the number of times until fracture in a case in which a stress with a stress amplitude $\Delta\sigma i$ repeatedly acts, that is, the fatigue life (the number of cycles to fracture) of the stress amplitude $\Delta\sigma i$, is defined as Ni and the number of repetitions of the stress amplitude $\Delta\sigma i$ corresponding to the fatigue life Ni is defined as ni, the cumulative damage degree is represented by the following formula on the basis of the linear cumulative damage rule.

$$\texttt{Cumulative damage degree} = \Sigma(n_i/N_i)$$

That is, the cumulative damage degree corresponds to a value obtained by dividing the number of repetitions of the stress generated in each stress range by the number of repetitions until breakage and summing the quotients across all stress amplitudes.

In the present embodiment, the cumulative load corresponding to the cumulative damage degree is computed by replacing the stress by the acceleration. When the stress is replaced by the acceleration, a coefficient defined in consideration of a correlation between the stress and the acceleration is used. This coefficient is defined by an experiment in advance. The acceleration sensor 53a is attached to a position at which a high correlation is obtained between the acceleration and the stress (that is, between the cumulative load based on the acceleration and the cumulative damage degree based on the stress). The correlation between the cumulative load and the cumulative damage degree is verified by an experiment or the like in advance. In the experiment, strain gauges were attached to a plurality of places on the swing frame 100, and the cumulative load computed on the basis of the sensing result of the acceleration sensor 53a was compared with the cumulative damage degree computed on the basis of sensing results of the strain gauges in work generally executed by the hydraulic excavator 1 (for example, excavation work or bumping work).

In the present embodiment, the attachment position of the acceleration sensor 53a is set such that the cumulative load based on the acceleration and the cumulative damage degree based on the stress are in a proportional relationship. Thus, in the present embodiment, the cumulative load computed on the basis of the sensing result of the acceleration sensor 53a can be computed as a value (index) corresponding to the cumulative damage degree.

Specifically, the load computation section 154 includes a frequency computation section 155, a load conversion section 156, and a cumulative load computation section 158. The frequency computation section 155 executes frequency processing by rainflow method or the like for every predetermined time width in the clock time history data on the acceleration. This converts the clock time history data of the acceleration to acceleration amplitudes (acceleration ranges) and frequency data that is data on the frequency (the number of times of occurrence) of the acceleration. The acceleration amplitude equal to or lower than 1 [m/s$^2$] is extremely slight as a load, and includes also a measurement error such as noise. Thus, the frequency computation section 155 excludes the frequency of the acceleration amplitude equal to or lower than 1 [m/s$^2$]. The load conversion section 156 computes a unit cumulative load that is the cumulative load for each predetermined time width on the basis of the frequency data computed by the frequency computation section 155.

The cumulative load computation section 158 computes the cumulative load concerning each operating state determined by the operating state determination section 151. The cumulative load computation section 158 executes weighting by multiplying, by a weighting factor k1, a value obtained by summing all unit cumulative loads in a clock time zone in which the operating state has been determined to be the working state in the clock time history data on the acceleration, to compute a cumulative load D1 in the working state. The cumulative load computation section 158 executes weighting by multiplying, by a weighting factor k2, a value obtained by summing all unit cumulative loads in a clock time zone in which the operating state has been determined to be the travelling state in the clock time history data on the acceleration, to compute a cumulative load D2 in the travelling state.

The degree of influence of vibration on the degree of wear of a component group differs between a component group that wears in the working state and a component group that wears in the travelling state. Further, the correlation between the acceleration signal and the cumulative damage degree differs depending on the operating state of the hydraulic excavator 1. In the hydraulic excavator 1 according to the present embodiment, the degree of influence of vibration on the component group that wears in the working state is high compared with the degree of influence of vibration on the component group that wears in the travelling state. Moreover, the degree of influence of the acceleration signal on the cumulative damage degree in the working state is higher than the degree of influence of the acceleration signal on the cumulative damage degree in the travelling state. Thus, the weighting factor k1 used for the computation of the cumulative load D1 in the working state is set to a value larger than the weighting factor k2 used for the computation of the cumulative load D2 in the travelling state. That is, the weighting factor of a larger value is used for the operating state in which the degree of influence of vibration is higher.

The cumulative load in the idle state is approximately zero experimentally. Thus, the load computation section 154 computes a cumulative load D0 in the idle state as 0 (zero).

The cumulative load computation section 158 computes a total cumulative load Dt of the hydraulic excavator 1 by summing the cumulative loads D0, D1, and D2 for each operating state in a clock time zone from start of the engine 23 by the engine key switch to stop of the engine 23 by the engine key switch (Dt = D0 + D1 + D2, D0 = 0).

The output control section 159 outputs a computation result of the load computation section 154 and a computation result of the running time computation section 152 to an external server 180 by using the communication device 71. The server 180 and the hydraulic excavator 1 are configured as a management system that manages the hydraulic excavator 1. A display device 181 and an input device 182 connected to the server 180 are included in the management system.

The output control section 159 generates data for output in which the total cumulative load Dt computed by the load computation section 154 is associated with the total running time Tt computed by the running time computation section 152. The data for output includes also an identification ID unique to the hydraulic excavator 1, the running times T0, T1, and T2 for each operating state, and the ratios R0, R1, and R2 of the running time for each operating state to the total running time Tt.

The computation processing and the output processing for the total cumulative load and the total running time are executed in machine body stop processing triggered by off-operation of the engine key switch. The computation processing and the output processing for the total cumulative load and the total running time may be executed in machine body start processing triggered by on-operation of the engine key switch. In this case, the computation processing and the output processing for the total cumulative load and the total running time are executed on the basis of the running information from the previous engine start to stop.

The communication device 71 is a device for executing communication with the server 180. The server 180 is disposed in a facility such as a management room set at a place distanced from the hydraulic excavator 1. The machine controller 14 outputs the data for output to the communication device 71, and transmits the data for output to the server 180 through the communication device 71. The communication device 71 is a wireless communication device capable of wireless communication with a communication line 190 that is a wide area network, and has a communication interface including a communication antenna that employs a predetermined frequency band as a reception band. The communication line 190 is a mobile phone communication network (mobile communication network) developed by a mobile phone carrier or the like, the Internet, or the like. The communication device 71 may directly or indirectly execute transfer of information with the server 180 by using a communication system such as Wi-Fi (registered trademark), ZigBee (registered trademark), or Bluetooth (registered trademark).

The display device 181 such as a liquid crystal display device and the input device 182 such as a keyboard and a mouse are connected to the server 180. The server 180 includes a communication device 183 for executing communication with the hydraulic excavator 1 through the communication line 190 and a storage device 184 such as a hard disk drive that stores the data for output received from the hydraulic excavator 1. The server 180 causes the display device 181 to display the data for output stored in the storage device 184 in a predetermined display form. An administrator can grasp the total cumulative load Dt and the total running time Tt of the predetermined hydraulic excavator 1 by operating the server 180 by the input device 182 to cause information on the predetermined hydraulic excavator 1 to be displayed on a display screen of the display device 181.

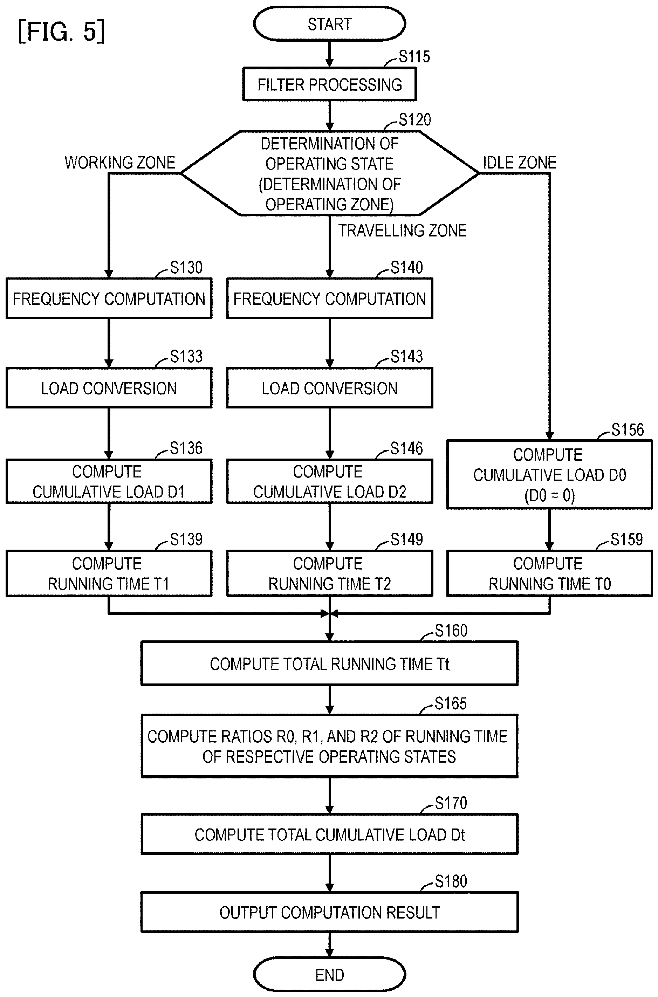

An example of the flow of processing executed by the machine controller 14 is described with reference to a flowchart of Fig. 5. When the engine key switch is turned on from the off-state, the machine controller 14 repeatedly acquires the running information (operation pressures, acceleration, actual engine rotation speed, and the like) of the hydraulic excavator 1, and stores the running information in the storage device. When the engine key switch is turned off from the on-state, the machine controller 14 executes the processing depicted in the flowchart of Fig. 5 on the basis of clock time history data (clock time history waveform) on the running information accumulated in the storage device. The timing of the processing is not limited to the timing at which the engine key switch is turned off, and the processing may be executed at a predetermined time interval.

In a step S115, the filter processing section 153 executes the filter processing for clock time history data on the acceleration, and advances the processing to a step S120.

In the step S120, the operating state determination section 151 executes determination processing of the operating state. The operating state determination section 151 determines the operating state for each clock time from the clock time history data on the running information (operation pressures and actual engine rotation speed). The operating state determination section 151 identifies a clock time zone in which the idle state is continuous as an idle zone. The operating state determination section 151 identifies a clock time zone in which the working state is continuous as a working zone. The operating state determination section 151 identifies a clock time zone in which the travelling state is continuous as a travelling zone.

When the identification of the working zone has been completed in the step S120, the processing is advanced to a step S130. The frequency computation section 155 computes, by rainflow method or the like, the frequency (the number of times of repetition) of each acceleration range (acceleration amplitude) for every predetermined time width in the working zone, and advances the processing to a step S133.

In the step S133, the load conversion section 156 divides the frequency of each acceleration range computed in the step S130 by the frequency until breakage in the acceleration range, to compute the degree of damage (amount corresponding to the load) in the acceleration range. The load conversion section 156 computes the unit cumulative loads in the predetermined time widths by summing the degrees of damage (amounts corresponding to the load) in all acceleration ranges, and advances the processing to a step S136.

In the step S136, the cumulative load computation section 158 computes the cumulative load D1 in the working zone by summing all unit cumulative loads in the working zone computed in the step S133.

In the next step S139, the running time computation section 152 computes the running time T1 in the working zone.

When the identification of the travelling zone has been completed in the step S120, the processing is advanced to a step S140. The frequency computation section 155 computes, by rainflow method or the like, the frequency (the number of times of repetition) of each acceleration range (acceleration amplitude) for every predetermined time width in the travelling zone, and advances the processing to a step S143.

In the step S143, the load conversion section 156 divides the frequency of each acceleration range computed in the step S140 by the frequency until breakage in the acceleration range, to compute the degree of damage (amount corresponding to the load) in the acceleration range. The load conversion section 156 computes the unit cumulative loads in the predetermined time widths by summing the degrees of damage (amounts corresponding to the load) in all acceleration ranges, and advances the processing to a step S146.

In the step S146, the cumulative load computation section 158 computes the cumulative load D2 in the travelling zone by summing all unit cumulative loads in the travelling zone computed in the step S143.

In the next step S149, the running time computation section 152 computes the running time T2 in the travelling zone.

When the identification of the idle zone has been completed in the step S120, the processing is advanced to a step S156. In the step S156, the load computation section 154 computes the cumulative load D0 of the idle zone as 0, and advances the processing to a step S159.

In the step S159, the running time computation section 152 computes the running time T0 in the idle zone.

Upon the completion of the processing of the step S139, S149, or S159, the processing is advanced to a step S160. The processing of the steps S130 to S139 (processing for the working zone), the processing of the steps S140 to S149 (processing for the travelling zone), and the processing of the steps S156 and S159 (processing for the idle zone) may be executed in parallel, or may be executed in series.

In the step S160, the running time computation section 152 computes the total running time Tt by summing the running time T1 of the working zone, the running time T2 of the travelling zone, and the running time T0 of the idle zone computed in the steps S139, S149, and S159, and advances the processing to a step S165.

In the step S165, the running time computation section 152 computes the ratios of the running time for the respective operating states to the total running time Tt. Specifically, the running time computation section 152 computes the ratio R1 (= T1/Tt) of the running time T1 in the working zone to the total running time Tt, the ratio R2 (= T2/Tt) of the running time T2 in the travelling zone to the total running time Tt, and the ratio R0 (= T0/Tt) of the running time T0 in the idle zone to the total running time Tt.

In the next step S170, the cumulative load computation section 158 computes the total cumulative load Dt by summing the cumulative load D1 in the working state computed in the step S136 and the cumulative load D2 in the travelling state computed in the step S146, and advances the processing to a step S180.

In the step S180, the output control section 159 associates the total running time Tt computed in the step S160, the total cumulative load Dt computed in the step S170, and the identification ID unique to the own machine with each other, and outputs them to the server 180. The output control section 159 outputs, to the server 180, also the running times T1, T2, and T0 for the respective operating states computed in the steps S139, S149, and S159 and the ratios R1, R2, and R0 of the running time for the respective operating states computed in the step S165.

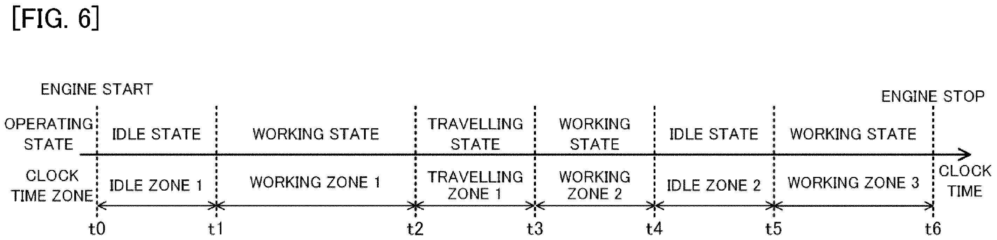

With reference to Fig. 6, a description is given of the cumulative loads D0, D1, and D2 and the running times T0, T1, and T2 computed concerning each operating state of the hydraulic excavator 1. Fig. 6 is a diagram depicting an example of time change in the operating state of the hydraulic excavator 1.

As depicted in Fig. 6, when the engine 23 is started by the engine key switch at a clock time t0, the operating state of the hydraulic excavator 1 becomes the idle state. At a clock time t1, an operator operates the work operation device 31 and the swing operation device 33 to start excavation work by the work device 1A. Thereupon, the operating state of the hydraulic excavator 1 becomes the working state. At a clock time t2, the operator ends the operation of the work operation device 31 and the swing operation device 33, and operates the travelling operation device 32 to start travelling by the lower track structure 11. Thereupon, the operating state of the hydraulic excavator 1 becomes the travelling state. At a clock time t3, the operator ends the operation of the travelling operation device 32, and operates the work operation device 31 and the swing operation device 33 to start excavation work by the work device 1A. Thereupon, the operating state of the hydraulic excavator 1 becomes the working state again.

At a clock time t4, the operator ends the operation of the work operation device 31 and the swing operation device 33 to take a rest. Thereupon, the operating state of the hydraulic excavator 1 becomes the idle state. At a clock time t5, the operator ends the rest, and operates the work operation device 31 and the swing operation device 33 to restart the excavation work by the work device 1A. Thereupon, the operating state of the hydraulic excavator 1 becomes the working state again. At a clock time t6, the operator ends the operation of the work operation device 31 and the swing operation device 33, and stops the engine 23 by the engine key switch.

The running time T0 in the idle state is obtained by summing the time of each of idle zone 1 from the clock time t0 to the clock time t1 and idle zone 2 from the clock time t4 to the clock time t5. The cumulative load D0 in the idle state is regarded as 0 (zero).

The cumulative load D1 in the working state is obtained by summing all of a plurality of unit cumulative loads computed in working zone 1 from the clock time t1 to the clock time t2, a plurality of unit cumulative loads computed in working zone 2 from the clock time t3 to the clock time t4, and a plurality of unit cumulative loads computed in working zone 3 from the clock time t5 to the clock time t6. The running time T1 in the working state is obtained by summing the time of each of working zone 1, working zone 2, and working zone 3.

The cumulative load D2 in the travelling state is obtained by summing all of a plurality of unit cumulative loads computed in travelling zone 1 from the clock time t2 to the clock time t3. The running time T2 in the travelling state corresponds to the time of travelling zone 1.

When the operation to stop the engine 23 has been executed by the engine key switch at the clock time t6, the machine controller 14 transmits, to the server 180, the running times T0, T1, and T2, the cumulative loads D0, D1, and D2, the total running time Tt (= T0 + T1 + T2), and the total cumulative load Dt (= D0 + D1 + D2) in the clock time zone from the start of the engine 23 to the stop thereof as one process of end processing.

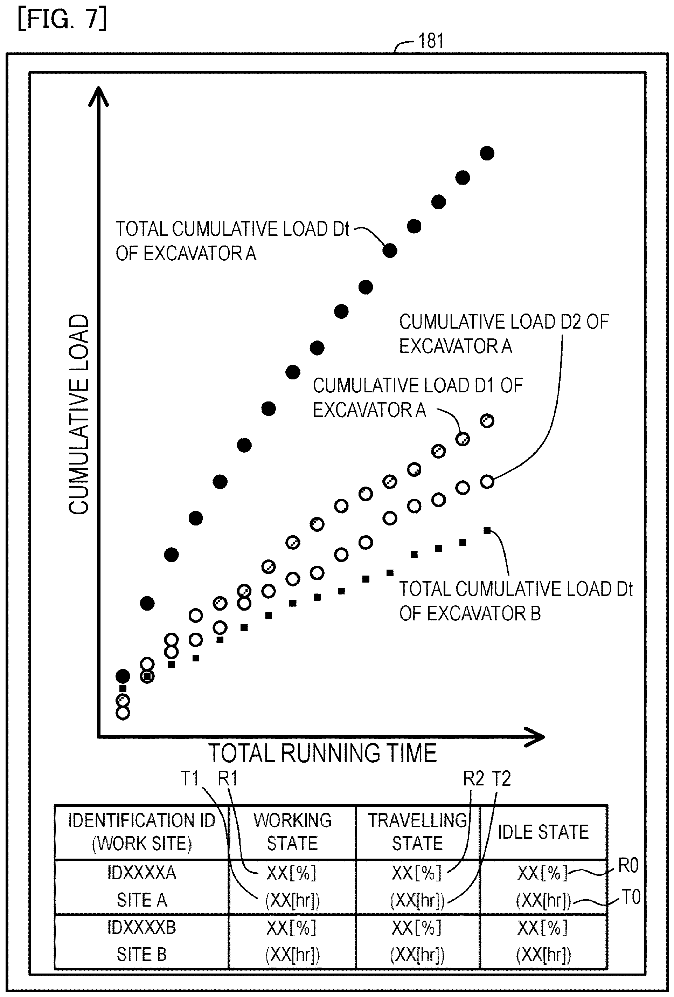

Fig. 7 is a diagram depicting an example of a displayed image displayed on the display screen of the display device 181. The server 180 acquires, from a plurality of hydraulic excavators 1, the data for output (running data such as the total cumulative load Dt, the total running time Tt, the cumulative loads D0, D1, and D2 for each operating state, the running times T0, T1, and T2 for each operating state, and the ratios R0, R1, and R2 for the running time), and causes a graph and a table depicted in Fig. 7 to be displayed on the display screen of the display device 181.

In the graph depicted in Fig. 7, a horizontal axis represents the total running time Tt, and a vertical axis represents the cumulative load. In the graph depicted in Fig. 7, the running data on a hydraulic excavator that is executing work at a first work site (hereinafter, referred to as excavator A) and the running data on a hydraulic excavator that is executing work at a second work site (hereinafter, referred to as excavator B) are plotted. The server 180 accumulates the running data from the hydraulic excavator 1 in the storage device 184, and causes the display device 181 to display the accumulated running data.

Data depicted with black circles indicates the total cumulative load Dt with respect to the total running time Tt concerning excavator A. Data depicted with squares filled with black indicates the total cumulative load Dt with respect to the total running time Tt concerning excavator B. By plotting the running data on the plurality of different hydraulic excavators 1 on one graph in this manner, comparison of the degree of damage accumulated in the hydraulic excavator 1 can be easily executed.

Further, data depicted with white circles given hatching with oblique lines indicates the cumulative load D1 with respect to the total running time Tt concerning excavator A. Data depicted with white circles indicates the cumulative load D2 with respect to the total running time Tt concerning excavator A. The cumulative loads D1 and D2 for each operating state of the hydraulic excavator 1 may be displayed in this manner. This allows easy check of a main factor in the degree of damage accumulated in the hydraulic excavator 1.

Although the example in which only the total cumulative load Dt is plotted as the running data on excavator B is depicted in Fig. 7, the cumulative loads D1 and D2 of excavator B may be plotted. Moreover, the running data on another hydraulic excavator may be further displayed. The administrator can change the content of display and the display form concerning the running data by operating the input device 182.

As depicted in Fig. 7, the server 180 causes the display screen to display the table indicating the ratios R0, R1, and R2 of the running time for each operating state to the total running time and the running times T0, T1, and T2 for each operating state. As the data represented in the table, the latest data among pieces of data acquired in the past may be employed, or an average value of the pieces of data acquired in the past may be employed. This allows the administrator to easily check a tendency of how the hydraulic excavator 1 is used. Further, a replacement timing of a component that wears due to the operating state with a high ratio can be estimated more properly. As a result, the administrator can make a maintenance plan more properly.

The display format of the data relating to the running time for each operating state is not limited to the example depicted in Fig. 7. For example, the ratio of the running time accumulated may be displayed in a graph format in which a horizontal axis is used for the total running time and a vertical axis is used for the ratio of the running time for each operating state to the total running time. Because time change in the ratio of the running time for each operating state is displayed, the administrator can easily check a change in the tendency of how the hydraulic excavator 1 is used.

In this manner, data on the cumulative load with respect to the total running time of the hydraulic excavator 1 at various work sites is displayed on the display device 181. The administrator can identify the hydraulic excavator 1 in which the cumulative load is high even with the same total running time. Moreover, the administrator can identify a work site at which the cumulative load tends to become high.

When being a seller of the hydraulic excavator 1, the administrator can properly execute, for the user of the hydraulic excavator 1, a proposal for a timing of replacement by purchase, valuation of the used product, a proposal for sale and specifications of a new product, and the like. When being a rental business operator of the hydraulic excavator 1, the administrator can properly set a rental fee depending on the work site. When being a maintenance business operator of the hydraulic excavator 1, the administrator can properly make a plan of maintenance. When being a developer of the hydraulic excavator 1, the administrator can properly execute development of a product according to characteristics of a work site.

According to the above-described embodiment, the following operation and effects are provided.

(1) The hydraulic excavator (work machine) 1 includes the machine body 1B, the work device 1A attached to the machine body 1B, the acceleration sensor 53a attached to the machine body 1B, and the machine controller (controller) 14. The machine controller 14 determines which operating state among a plurality of operating states the hydraulic excavator 1 is in on the basis of the running information (actual engine rotation speed and operation pressures) on the hydraulic excavator 1. The machine controller 14 executes weighting according to the degree of influence of vibration concerning each operating state on the basis of the sensing result of the acceleration sensor 53a, and computes the cumulative loads D0, D1, and D2 that represent a cumulative value of the load acting on the hydraulic excavator 1 concerning each operating state. The machine controller 14 computes the total cumulative load Dt by summing the cumulative load for each operating state, and outputs the computed total cumulative load Dt.

In this configuration, the degree of damage accumulated in daily work by the hydraulic excavator 1 is computed as the total cumulative load Dt that is the sum of the cumulative load computed in consideration of the weight concerning each operating state. Thus, the hydraulic excavator 1 that can accurately quantify the degree of damage (total cumulative load Dt) can be provided.

(2) The machine body 1B has the lower track structure (track structure) 11 and the upper swing structure (swing structure) 12 swingably disposed over the lower track structure 11, with the swing circle 17 interposed therebetween. The hydraulic excavator 1 includes the engine (prime mover) 23 mounted in the upper swing structure 12, the rotation speed sensor 23a that senses the rotation speed of the engine 23, and the operation sensors 34a, 34b, 35a, 35b, 36a, and 36b that sense operation for the lower track structure 11, the upper swing structure 12, and the work device 1A. The sensing result of the rotation speed sensor 23a and the sensing results of the operation sensors 34a, 34b, 35a, 35b, 36a, and 36b are included in the running information.

The machine controller 14 determines whether or not the hydraulic excavator 1 is in a state in which the engine 23 is running on the basis of the sensing result of the rotation speed sensor 23a. The machine controller 14 determines whether or not each of the lower track structure 11, the upper swing structure 12, and the work device 1A is operated on the basis of the sensing results of the operation sensors 34a, 34b, 35a, 35b, 36a, and 36b. The machine controller 14 determines that the operating state of the hydraulic excavator 1 is the idle state in a case of the state in which the engine 23 is running and a state in which none of the lower track structure 11, the upper swing structure 12, and the work device 1A is operated. The machine controller 14 determines that the operating state of the hydraulic excavator 1 is the travelling state in a case of a state in which the lower track structure 11 is operated and neither the work device 1A nor the upper swing structure 12 is operated. The machine controller 14 determines that the operating state of the hydraulic excavator 1 is the working state in a case of a state in which at least one of the work device 1A and the upper swing structure 12 is operated. The machine controller 14 regards the cumulative load in the idle state as 0. The machine controller 14 computes the cumulative load D1 in the working state and the cumulative load D2 in the travelling state by using the different weighting factors k1 and k2. The machine controller 14 computes the total cumulative load Dt by summing the cumulative load D1 in the working state and the cumulative load D2 in the travelling state.

By regarding the cumulative load in the idle state as 0, the computation load and the computation time can be reduced. Further, in the present embodiment, in view of the difference in the degree of influence of the acceleration on the cumulative load, the weighting used for the computation of the cumulative load D1 in the working state is larger than the weighting used for the computation of the cumulative load D2 in the travelling state. This enables the cumulative load in the working state and the cumulative load in the travelling state to be properly obtained, and can enhance the accuracy of the computation of the total cumulative load Dt.

(3) The machine controller 14 computes the running times T0, T1, and T2 for each operating state, and computes the total running time Tt by summing the running times T0, T1, and T2 for each operating state. The machine controller 14 associates the total running time Tt with the total cumulative load Dt and outputs them, and outputs the running times T0, T1, and T2 for each operating state and the ratios R0, R1, and R2 of the running times T0, T1, and T2 for each operating state to the total running time Tt.

According to this configuration, the relationship between the total cumulative load Dt and the total running time Tt can be easily checked. Moreover, by checking the running time for each operating state and the ratio thereof, a tendency of how the hydraulic excavator 1 is used can be easily grasped. Further, a replacement timing of a component that wears due to the operating state with a high ratio can be properly estimated.

(4) The upper swing structure 12 has the center frame 110 supported by the swing circle 17 and the side frames 120 and 130 that are disposed on lateral sides of the center frame 110 and are supported by the center frame 110. The acceleration sensor 53a is attached to, for example, the center frame 110. By attaching the acceleration sensor 53a to a part with high flexural rigidity near the swing circle 17, vibration that acts on the hydraulic excavator 1 from the ground in such a manner as to thrust up the hydraulic excavator 1 can be directly measured, for example.

(5) The acceleration sensor 53a that senses the acceleration used for computation of the cumulative load is included in the machine body inclination angle sensor 53 that is an inertial measurement device that senses the inclination angle of the upper swing structure 12 (machine body 1B). Thus, the number of components can be reduced compared with a case in which an acceleration sensor is disposed separately from the machine body inclination angle sensor 53.

The following modifications are also within the scope of the present invention, and it is also possible to combine a configuration depicted in the modification and a configuration explained in the above-described embodiment or combine configurations to be explained in the following different modifications with each other.

<Modification 1>

In the above-described embodiment, the example in which the cumulative load D0 in the idle state is regarded as 0 has been described. However, the cumulative load D0 (> 0) in the idle state may be computed. In this case, the load computation section 154 generates frequency data in a clock time zone in which the operating state has been determined to be the idle state (idle zone) in clock time history data on the acceleration, and computes the cumulative load D0 in the idle state on the basis of the generated frequency data.

<Modification 2>

The method for determining the operating state is not limited to the example explained in the above-described embodiment. For example, in a case in which a plurality of main pumps 21 are disposed corresponding to each of the hydraulic cylinder S of the work device 1A, the travelling hydraulic motor 3, and the swing hydraulic motor 4, the operating state may be determined on the basis of the load factor of the main pump 21. The machine controller 14 computes load torque To that acts on the main pump 21 on the basis of a delivery pressure P of the main pump 21 sensed by a delivery pressure sensor and a volume (tilting angle) q of the main pump 21 (To = q $\times$ P/2$\pi$). The machine controller 14 computes the pump load factor by dividing the computed load torque To by maximum pump torque Tomax in terms of specifications of the main pump 21.

The machine controller 14 determines that (Condition 2) is satisfied when the load factors of all main pumps 21 are lower than a load factor threshold. The machine controller 14 determines that (Condition 3) is satisfied when the load factor of the main pump 21 that supplies the hydraulic operating fluid to the travelling hydraulic motor 3 is equal to or higher than the load factor threshold. The machine controller 14 determines that (Condition 4) is satisfied when both the load factor of the main pump 21 that supplies the hydraulic operating fluid to the swing hydraulic motor 4 and the load factor of the main pump 21 that supplies the hydraulic operating fluid to the hydraulic cylinder S are lower than the load factor threshold. The machine controller 14 determines that (Condition 5) is satisfied when at least one of the load factor of the main pump 21 that supplies the hydraulic operating fluid to the swing hydraulic motor 4 and the load factor of the main pump 21 that supplies the hydraulic operating fluid to the hydraulic cylinder S is equal to or higher than the load factor threshold.

Further, the machine controller 14 may determine whether or not (Condition 2) to (Condition 5) are satisfied by detecting actual operation of the work device 1A, the upper swing structure 12, and the lower track structure 11 from the sensing results of the angle sensors 50 to 53. Moreover, the machine controller 14 may determine that (Condition 2) is satisfied when the lock lever device 30 has been operated to the lock position.

<Modification 3>

In the above-described embodiment, the example in which the operating state is any of the idle state, the working state, and the travelling state has been described. However, the operating state may be further subdivided. For example, the working state may be divided into an excavation work state, a bumping work state, and a land leveling work state. The cumulative load is computed in consideration of weights different from each other in the excavation work state, the bumping work state, and the land leveling work state. The idle state may be subdivided into an automatic idle state and an idle state other than it. Further, in a case in which the hydraulic excavator 1 includes a transmission mechanism that enables gear shift to a plurality of speed stages, the travelling state may be subdivided into travelling states according to the speed stage.

<Modification 4>

In the above-described embodiment, the description has been given of the example in which the cumulative load is computed on the basis of the sensing result of the acceleration sensor 53a attached to the upper swing structure 12. However, the attachment position of the acceleration sensor 53a that senses the acceleration used for computation of the cumulative load is not limited to the upper swing structure 12. The acceleration sensor 53a may be attached to the frame of the lower track structure 11. Moreover, the acceleration sensor that senses the acceleration used for computation of the cumulative load may be attached to the work device 1A.

<Modification 5>

In the above-described embodiment, the description has been given of the example in which the cumulative load attributed to vibration or shock acting on the machine body 1B is computed by using the acceleration sensor 53a included in the machine body inclination angle sensor 53 that senses the inclination angle of the machine body 1B. However, the acceleration sensor that senses the acceleration used for computation of the cumulative load may be disposed separately from the machine body inclination angle sensor 53. In this case, the acceleration sensor is not required to be a sensor that measures acceleration in the axial directions of orthogonal three axes, and a single-axis accelerometer may be employed.

<Modification 6>

In the above-described embodiment, the description has been given of the example in which the machine controller 14 outputs both the running times T0, T1, and T2 for each operating state and the ratios R0, R1, and R2 of the running times T0, T1, and T2 for each operating state to the total running time Tt. However, the machine controller 14 may output only one side of the running times T0, T1, and T2 for each operating state and the ratios R0, R1, and R2 of the running times T0, T1, and T2 for each operating state to the total running time Tt. That is, it is preferable that the machine controller 14 be configured to output at least one side of the running times T0, T1, and T2 for each operating state and the ratios R0, R1, and R2 of the running times T0, T1, and T2 for each operating state to the total running time Tt.

<Modification 7>

In the above-described embodiment, the description has been given of the example in which the computation result of the cumulative load and the running time is displayed on the display device 181 in a facility disposed at a place distanced from the hydraulic excavator 1. However, the computation result may be displayed on the display device 72 such as a liquid crystal display device disposed in the cab 16 of the hydraulic excavator 1. The machine controller 14 may acquire and display not only the cumulative load and the running time of the machine including this machine controller 14 but also the cumulative load and the running time from other hydraulic excavators 1.

<Modification 8>

In the above-described embodiment, the description has been given of the example in which the weighting factor k1 used for the computation of the cumulative load D1 in the working state is larger than the weighting factor k2 used for the computation of the cumulative load D2 in the travelling state. However, depending on specifications of the hydraulic excavator 1, there is also a case in which the degree of influence of vibration is higher in the travelling state than in the working state and it is preferable to set the weighting factor k2 used for the computation of the cumulative load D2 in the travelling state larger than the weighting factor k1 used for the computation of the cumulative load D1 in the working state. Further, the same weighting factor may be used when the degree of influence of vibration is approximately the same in a certain operating state and another operating state among the plurality of operating states. For example, the weighting factor k1 and the weighting factor k2 may be set to the same value when the difference between the degree of influence of vibration in the working state and the degree of influence of vibration in the travelling state is small.

<Modification 9>

In the above-described embodiment, the example in which the work machine is the hydraulic excavator 1 has been described. However, the work machine is not limited to the hydraulic excavator. For example, the work machine may be a wheel loader. When the work machine is a wheel loader, the operating state when a work device is operating is determined to be the working state, and the operating state when the work device is not operating and a travelling motor is operating is determined to be the travelling state.

Although the embodiment of the present invention has been described above, the above-described embodiment has merely depicted part of application examples of the present invention, and does not intend to limit the technical scope of the present invention to the specific configurations of the above-described embodiment.

Description of Reference Characters

1: hydraulic excavator (work machine)
1A: work device
1B: machine body
3: travelling hydraulic motor
4: swing hydraulic motor
5: boom cylinder (hydraulic cylinder)
6: arm cylinder (hydraulic cylinder)
7: bucket cylinder (hydraulic cylinder)
8: boom
9: arm
10: bucket
11: lower track structure (track structure)
12: upper swing structure (swing structure)
14: machine controller (controller)
15: engine control dial
16: cab
17: swing circle
19: machine room
21: main pump (hydraulic pump)
22: pilot pump (hydraulic pump)
23: engine
23a: rotation speed sensor
26: lock valve
30: lock lever device
31: work operation device (operation device)
32: travelling operation device (operation device)
33: swing operation device (operation device)
34a, 34b: work operation sensor (operation sensor)
35a, 35b: travelling operation sensor (operation sensor)
36a, 36b: swing operation sensor (operation sensor)
50: boom angle sensor (angle sensor)
51: arm angle sensor (angle sensor)
52: bucket angle sensor (angle sensor)
53: machine body inclination angle sensor (angle sensor)
53a: acceleration sensor
71: communication device
72: display device
100: swing frame
110: center frame
111: bottom plate

112: vertical plate
120: left side frame (side frame)
121: outer frame portion
124: inner frame portion
125: beam
130: right side frame (side frame)
131: outer frame portion
135: beam
141: processing device
142: non-volatile memory (storage device)
143: volatile memory (storage device)
151: operating state determination section
152: running time computation section
153: filter processing section
154: load computation section
155: frequency computation section
156: load conversion section
158: cumulative load computation section
159: output control section
180: server
181: display device
182: input device
183: communication device
184: storage device
190: communication line
S: hydraulic cylinder

**Claims**

1. A work machine comprising:

   a machine body;
   a work device attached to the machine body;
   an acceleration sensor attached to the machine body or the work device; and
   a controller, wherein
   the controller is configured to

      determine which operating state among a plurality of operating states the work machine is in, on a basis of running information on the work machine,
      execute weighting according to a degree of influence of vibration concerning each of the operating states on a basis of a sensing result of the acceleration sensor, and compute a cumulative load that represents a cumulative value of a load acting on the work machine concerning each of the operating states,
      compute a total cumulative load by summing the cumulative load for each of the operating states, and
      output the total cumulative load.

2. The work machine according to claim 1, wherein

   the machine body has a track structure and a swing structure swingably disposed over the track structure, with a swing circle interposed therebetween,
   the work machine includes
   a prime mover mounted in the swing structure,
   a rotation speed sensor that senses rotation speed of the prime mover, and
   an operation sensor that senses operation for the track structure, the swing structure, and the work device,
   a sensing result of the rotation speed sensor and a sensing result of the operation sensor are included in the running information, and
   the controller is configured to

determine whether or not the work machine is in a state in which the prime mover is running, on a basis of the sensing result of the rotation speed sensor,

determine whether or not each of the track structure, the swing structure, and the work device is operated on a basis of the sensing result of the operation sensor,

determine that the operating state is an idle state in a case of the state in which the prime mover is running and a state in which none of the track structure, the swing structure, and the work device is operated,

determine that the operating state is a travelling state in a case of a state in which the track structure is operated,

determine that the operating state is a working state in a case of a state in which at least one of the work device and the swing structure is operated,

regard the cumulative load in the idle state as 0, and

compute the total cumulative load by summing the cumulative load in the working state and the cumulative load in the travelling state.

3.  The work machine according to claim 2, wherein
    weighting used for computation of the cumulative load in the working state is larger than weighting used for computation of the cumulative load in the travelling state.

4.  The work machine according to claim 2, wherein
    the controller is configured to

    compute a running time for each of the operating states,
    compute a total running time by summing the running time for each of the operating states, and
    associate the total running time with the total cumulative load and output the total running time and the total cumulative load, and output at least one of the running time for each of the operating states and a ratio of the running time for each of the operating states to the total running time.

5.  The work machine according to claim 2, wherein

    the swing structure has a center frame supported by the swing circle and a side frame that is disposed on a lateral side of the center frame and is supported by the center frame, and
    the acceleration sensor is attached to the center frame.

[FIG. 1]

[FIG. 2]

[FIG. 3]

EP 4 692 474 A1

[FIG. 4]

EP 4 692 474 A1

[FIG. 5]

```
                        ┌──────────────────┐
                        │      START       │
                        └──────────────────┘
                                 │ ┌─S115
                                 ▼
                        ┌──────────────────┐
                        │ FILTER PROCESSING│
                        └──────────────────┘
                                 │ ┌─S120
                                 ▼
                    ┌──────────────────────────┐
   WORKING ZONE     │   DETERMINATION OF       │   IDLE ZONE
   ◄────────────────┤   OPERATING STATE        ├────────────────►
                    │   (DETERMINATION OF      │
                    │   OPERATING ZONE)        │
                    └──────────────────────────┘
                           TRAVELLING ZONE
```

| FREQUENCY COMPUTATION S130 | FREQUENCY COMPUTATION S140 | |
| LOAD CONVERSION S133 | LOAD CONVERSION S143 | |
| COMPUTE CUMULATIVE LOAD D1 S136 | COMPUTE CUMULATIVE LOAD D2 S146 | COMPUTE CUMULATIVE LOAD D0 (D0 = 0) S156 |
| COMPUTE RUNNING TIME T1 S139 | COMPUTE RUNNING TIME T2 S149 | COMPUTE RUNNING TIME T0 S159 |

S160
COMPUTE TOTAL RUNNING TIME Tt

S165
COMPUTE RATIOS R0, R1, AND R2 OF RUNNING TIME OF RESPECTIVE OPERATING STATES

S170
COMPUTE TOTAL CUMULATIVE LOAD Dt

S180
OUTPUT COMPUTATION RESULT

END

[FIG. 6]

ENGINE START

ENGINE STOP

| OPERATING STATE | IDLE STATE | WORKING STATE | TRAVELLING STATE | WORKING STATE | IDLE STATE | WORKING STATE |

| CLOCK TIME ZONE | IDLE ZONE 1 | WORKING ZONE 1 | TRAVELLING ZONE 1 | WORKING ZONE 2 | IDLE ZONE 2 | WORKING ZONE 3 | CLOCK TIME |

t0    t1    t2    t3    t4    t5    t6

EP 4 692 474 A1

[FIG. 7]

181

TOTAL CUMULATIVE LOAD Dt
OF EXCAVATOR A

CUMULATIVE LOAD D2 OF
EXCAVATOR A

CUMULATIVE LOAD D1 OF
EXCAVATOR A

TOTAL CUMULATIVE LOAD Dt
OF EXCAVATOR B

CUMULATIVE LOAD (vertical axis)

TOTAL RUNNING TIME (horizontal axis)

T1  R1                              R2 T2

| IDENTIFICATION ID (WORK SITE) | WORKING STATE | TRAVELLING STATE | IDLE STATE |
|---|---|---|---|
| IDXXXXA SITE A | XX[%] (XX[hr]) | XX[%] (XX[hr]) | XX[%] (XX[hr]) |
| IDXXXXB SITE B | XX[%] (XX[hr]) | XX[%] (XX[hr]) | XX[%] (XX[hr]) |

R0
T0

## INTERNATIONAL SEARCH REPORT

| International application No. |
| --- |
| **PCT/JP2023/046527** |

| A. | CLASSIFICATION OF SUBJECT MATTER |
| --- | --- |

*E02F 9/26*(2006.01)i; *E02F 9/20*(2006.01)i
FI:   E02F9/26 B; E02F9/20 N

According to International Patent Classification (IPC) or to both national classification and IPC

| B. | FIELDS SEARCHED |
| --- | --- |

Minimum documentation searched (classification system followed by classification symbols)

E02F9/26; E02F9/20; G06Q50/08

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2016-99744 A (HITACHI CONSTRUCTION MACHINERY CO., LTD.) 30 May 2016 (2016-05-30)<br>entire text, all drawings | 1-5 |
| A | JP 2023-34771 A (SUMITOMO (SHI) CONSTRUCTION MACHINERY CO., LTD.) 13 March 2023 (2023-03-13)<br>entire text, all drawings | 1-5 |
| A | JP 2009-68259 A (CATERPILLAR JAPAN LTD.) 02 April 2009 (2009-04-02)<br>entire text, all drawings | 1-5 |
| A | JP 2014-163047 A (HITACHI CONSTRUCTION MACHINERY CO., LTD.) 08 September 2014 (2014-09-08)<br>entire text, all drawings | 1-5 |
| A | JP 2016-105213 A (HITACHI CONSTRUCTION MACHINERY CO., LTD.) 09 June 2016 (2016-06-09)<br>entire text, all drawings | 1-5 |

| ✓ Further documents are listed in the continuation of Box C. | ✓ See patent family annex. |
| --- | --- |

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **27 February 2024** | **05 March 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

| International application No. |
|---|
| **PCT/JP2023/046527** |

**C.    DOCUMENTS CONSIDERED TO BE RELEVANT**

| Category* | Citation of document, with indication, where appropriate, of the relevant passages | Relevant to claim No. |
|---|---|---|
| A | JP 2021-155930 A (SUMITOMO HEAVY INDUSTRIES, LTD.) 07 October 2021 (2021-10-07)<br>entire text, all drawings | 1-5 |
| A | JP 2021-177294 A (HIROSHIMA UNIVERSITY) 11 November 2021 (2021-11-11)<br>entire text, all drawings | 1-5 |
| A | JP 7234398 B2 (HITACHI CONSTRUCTION MACHINERY CO., LTD.) 07 March 2023 (2023-03-07)<br>entire text, all drawings | 1-5 |
| A | JP 2021-110106 A (HITACHI CONSTRUCTION MACHINERY CO., LTD.) 02 August 2021 (2021-08-02)<br>entire text, all drawings | 1-5 |
| A | WO 2022/138058 A1 (HITACHI CONSTRUCTION MACHINERY CO., LTD.) 30 June 2022 (2022-06-30)<br>entire text, all drawings | 1-5 |

**INTERNATIONAL SEARCH REPORT**
Information on patent family members

International application No.

**PCT/JP2023/046527**

| Patent document cited in search report | | | Publication date (day/month/year) | Patent family member(s) | | | Publication date (day/month/year) |
|---|---|---|---|---|---|---|---|
| JP | 2016-99744 | A | 30 May 2016 | (Family: none) | | | |
| JP | 2023-34771 | A | 13 March 2023 | (Family: none) | | | |
| JP | 2009-68259 | A | 02 April 2009 | (Family: none) | | | |
| JP | 2014-163047 | A | 08 September 2014 | (Family: none) | | | |
| JP | 2016-105213 | A | 09 June 2016 | WO | 2014/141855 | A1 | |
| JP | 2021-155930 | A | 07 October 2021 | CN | 113445566 | A | |
| JP | 2021-177294 | A | 11 November 2021 | (Family: none) | | | |
| JP | 7234398 | B2 | 07 March 2023 | US | 2022/0396933 | A1 | |
| JP | 2021-110106 | A | 02 August 2021 | US | 2022/0307237 | A1 | |
| WO | 2022/138058 | A1 | 30 June 2022 | CN | 116096970 | A | |

Form PCT/ISA/210 (patent family annex) (July 2022)

**EP 4 692 474 A1**

**Patent documents cited in the description**

*   WO 2021025034 A1